# EUROPEAN PATENT APPLICATION

(11) **EP 1 622 396 A1**
(43) Date of publication of application: **01.02.2006**
(21) Application number: 04425591.7
(22) Date of filing: 30.07.2004
(51) Int. Cl.: H04Q 1/14, H01R 9/24

(54) **Access module for telephone cables**

(71) Applicant: CIS Sud S.r.l., 00040 Ariccia Roma (IT)
(72) Inventor: Bernardini, Giuseppe, 00128 Roma (IT)
(74) Representative: Sarpi, Maurizio

(57) **Abstract**

An access module (1) for termination strips (2) of telephone cables characterized in that in order to operate the sectioning of the telephone wire pairs connected to the termination strips in the "user side", "exchange side" and both sides, it consists of a series of single elements (3) releasably stacked on one another in the termination strip and provided with suitable means (5) for the mechanical and electrical connection to the wire pairs connected to the termination strip.

Such access module further comprises two side uprights (14,15) provided with means (16) for the electrical connection to the single elements inserted into the telephone wire pairs connected to the termination strip, and means (19) for the connection to a local measurement apparatus of the known type.

## Description

The present invention relates to fixed telephony, and particularly an apparatus allowing the access to wire pairs already connected to telephone exchanges.

In recent times telephone operators have re-appraised functionally copper (or other suitable material) nets that are made of wire pairs. Such nets have hitherto been used for the so-called "voice" telephone service.

The beginning of the optical fibre cable technology and wide band signal transmission seemed it would supplant the old nets forever.

At the same time even more compulsory needs of market development and capital investment have addressed the development of new apparatus capable of transmitting (reduced) wide band signals on copper wire pairs after compression. Such technology has been recently developed and is known under the designation ADSL.

The need of a remote control and/or service apparatus to measure automatically the transmission parameters of the net carrier has arisen since long time to operate a widespread copper net and become a primary need with the new ADSL technology that requires a fully effective line quality.

It is known that the telephone wire pairs start together from the telephone exchange and/or the line distributor racks and reach users individually, while other pairs are redundant and will be used for new connections.

In the telephone exchange and/or racks the pairs are terminated in groups to termination strips and from the latter the operating pairs are then connected to the transmitting apparatus of the exchange.

In order to control effectively such pairs, it is necessary that the measurement apparatus have direct access to the termination strip of the pairs.

The access to the termination strips is carried out by a system patented by one of the Applicants of the present invention that provides essentially the use, in combination, of a remote control device, a local measurement apparatus, and at least an access module to the termination strip of the pairs.

The access module operates for the sectioning of the wire pairs at the "user side", "exchange side" and both sides.

With reference to the foregoing, the main object of the present invention is to provide an access module to the termination strip of the pairs which is specifically able to allow such sectioning and can be installed and operated without modifying or changing the already existing strips.

According to the invention, such access module has the following essential features:
- its installation does not involve structural changes in the existing termination strips;
- its installation can be permanent, i.e. as an additional completion part of the termination strip;
- its installation is mechanically easy and quick and avoids any movable electric connection;
- its installation is stable and sturdy and does not have additional mechanical connections for the termination strip;
- its installation provides only one module for each single termination strip;
- the single members of such access module can be easily removed individually for any operation in the pairs of the strip.

This has been accomplished according to the invention by providing an access module consisting essentially of a series of single elements which can be releasably stacked on one another in the termination strip.

A better understanding of the invention will result from the following detailed description with reference to the accompanying drawings that show some preferred embodiments thereof with some variations only by way of a not limiting example.

In the drawings:

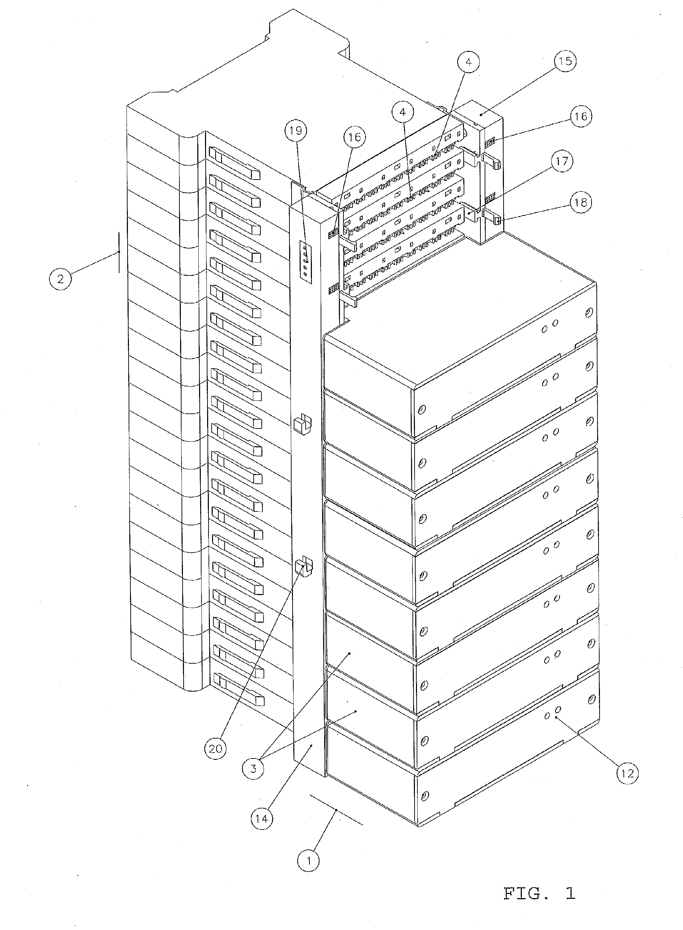

Figure 1 is a perspective view showing a termination strip of the known type, to which some single removable elements are installed forming the access module together with two uprights including the connections among the single elements and the remote control device and the local measurement apparatus;
Figure 2 shows a perspective view of a single element from its side of insertion into the termination strip;
Figure 3 shows a perspective view of a variation of the single element from its side of insertion into the termination strip;
Figure 4 is a perspective view of the single element of fig. 2 in which the side opposite to the side of insertion into the termination strip is shown;

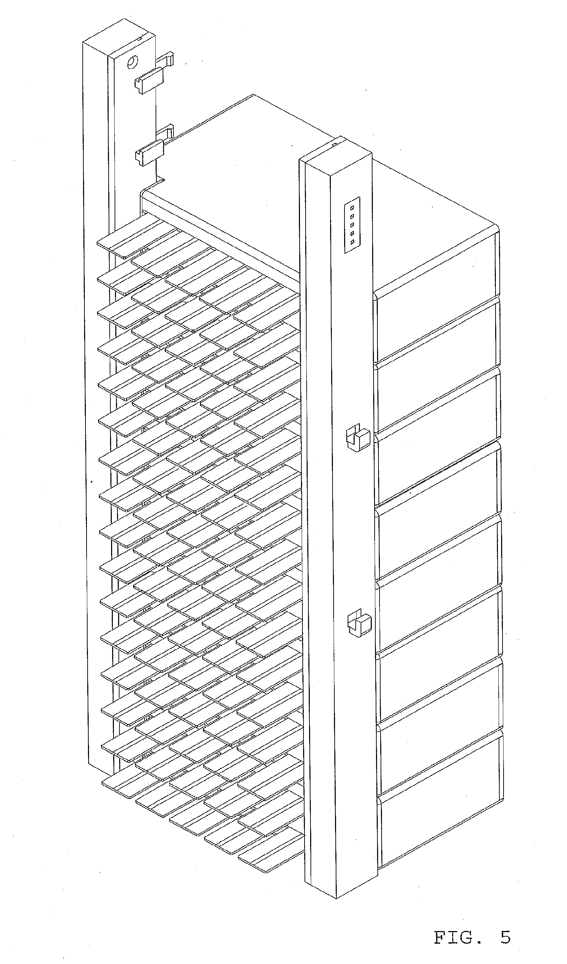

Figure 5 shows a perspective view of the insertion side of a series of single elements installed to the termination strip together with two side uprights; and

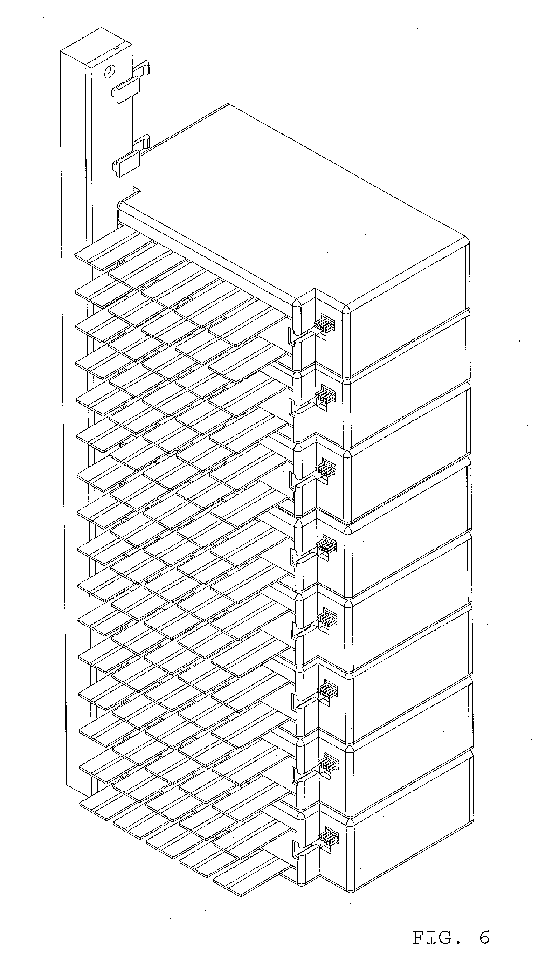

Figure 6 is similar to the preceding one but without one upright to show one of the two multiple male connectors that connect electrically the uprights to each element;
Figures 7 and 8 are similar to the preceding figs. 2 and 4, respectively, and show a construction variation of the single element; and
Figure 9 is an electric diagram of the circuit inside each single element.

With reference to the figures described above, access module 1 of termination strip 2 consisting of series of single elements 3 and side uprights for the connection to the local measurement apparatus is the very important characterizing element of the whole measurement assembly.

According to the invention, each element is connected to two rows of wire pairs disposed on two adjacent parallel planes 4 in case of vertically arranged strips and viceversa in case of horizontally arranged strips.

In the embodiment illustrated, the wires "a" and "b" of each pair (not shown) are disposed horizontally side by side.

Electronic circuits and components are disposed inside a container preferably of plastics forming as a whole the already mentioned single element 3.

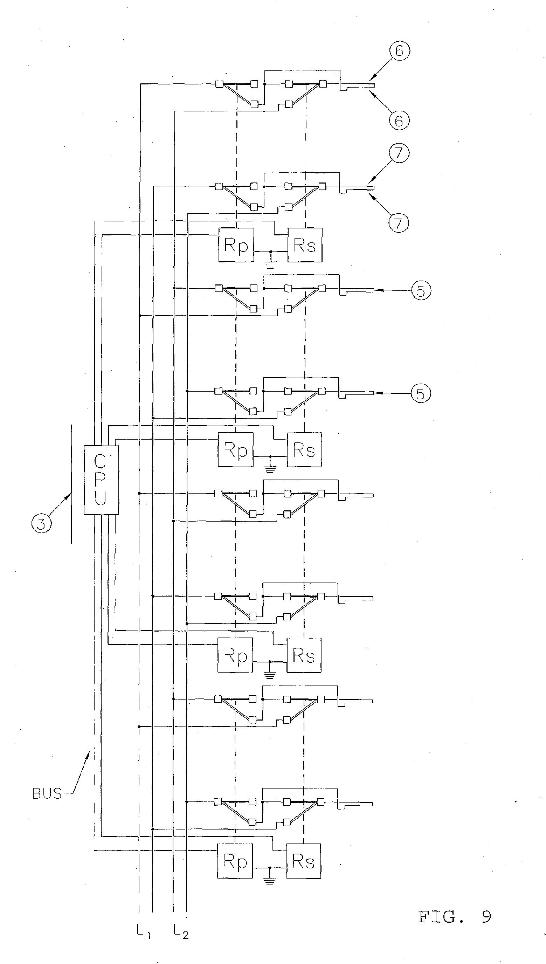

A possible diagram of the electric and/or electronic circuit showing the connections to the telephone wire pairs is schematically illustrated in figure 9. Such figure shows the basic electric diagram of the single element 3 comprising the contact pads 5 with the "user side" and "exchange side" wire pairs 6 and 7. In particular, L1 and L2 are the pairs for the measurement that are connected to the pairs of the "user side" and exchange side" termination strip. The circuits are supplied through a common bus, and CPU is the processor controlling the operation of element 3 and the interface with the remote control apparatus and local measurement apparatus mentioned above.

As known, the "user side" and the "exchange side" of each wire of a pair are connected to a pair of elastic reeds which are in contact to each other (short circuit) under rest conditions so as to connect the exchange side to the user side. According to the invention each single element 3 is provided with tongues 5 each of them is able to insert between a pair of said reeds to operate the sectioning of the exchange side from the user side of each wire of the telephone pairs.

Projected outwards of each container are tongues 5 that are able to be inserted into the sectioning contacts 4 of the corresponding pairs of termination strip 2 when the single elements 3 are operated.

The number of tongues 5 of each single element 3 depends on the arrangement of the termination strip (100, 120 pairs, ..., etc.).

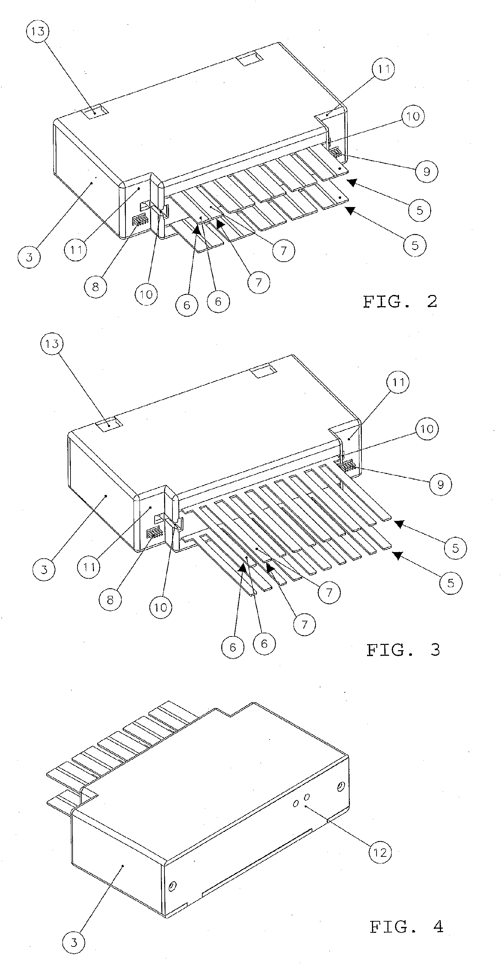

For example, each tongue shown in figure 2 has four conductive contact areas 6 and 7 (two upper areas and two lower areas) corresponding to the elastic end reeds (user side and exchange side) of the two wires of each pair, respectively.

In the variation shown in figure 3 each tongue has two conductive contact areas 6 or 7 (one upper area and one lower area) corresponding to the elastic end reeds (user side and exchange side) of one of the two wires of each pair, respectively.

It should be noted that the tongues are made of an insulating material to which such conductive contact areas for the elastic reeds connected to the wires of each telephone pair are fastened.

On the same side from which tongues 5 project the single element 3 includes a first multiple male connector 8 of the power supply line and the control line of the single element 3 on one side, and a second multiple connector 9 of the two available measurement lines on the other side.

As already mentioned, the side of tongues 5 is the inner side of the single element 3, i.e. the side facing termination strip 2.

Two lateral fitting seats provided with a locking abutment 10 are arranged at the side of the container from which tongues 5 project.

At the corners of a side of each single element two like angular recesses 11 are formed to provide a greater mechanical withstand and rigidity upon assembling to the assembly consisting of the single stacked elements 3 and two side uprights 14 and 15 forming as a whole access module 1.

Two LEDs 12 whose lighting indicates the connection of the first and/or the second available measurement line (fig. 4) are arranged on the wall of the outer side of each single element 3, i.e. the wall opposite to tongues 5.

Located on the two uprights are multiple female right and left connectors 16 corresponding to the already described first and second male connectors 8 and 9 of single elements 3 as well as guide supports 17 for fitting seats 10 of such single elements and hooked tangs 18 for locking such fitting seats.

Also multiple female connectors 19 are located on such uprights and connected to the service lines of access modules 1.

Finally, located on at least one upright 14 or 15 is at least a pair of hooks 20 for "parking" a single element 3 when the same is removed from its seat during the service of termination line 2. Such pair of hooks 20 are able to be inserted into suitable cavities or seats 13 arranged in the container of the single element 3 to be suspended at the upright when it is removed from the operation position.

A first peculiar feature of the invention consists in that each access module 1 is one assembly for each termination strip 2 and, as mentioned above, consists of several single elements 2 and two side uprights 14, 15.

Advantageously, access module 1 described above can be installed without any construction modification to the existing termination strips 2.

A second peculiar feature of the invention is that advantageously, upon assembling, single elements 3 and the two side uprights 14 and 15 join together only by means of fixed joints both for the mechanical parts 10, 17 and 18 and the electrical connections 8, 9 and 16.

A further advantage of the invention consists in that single elements 3 can be removed one at a time from their seat 4 for any service operation to termination strip 2.

A third peculiar feature of the invention consists in that tongues 5 are the only electric contact as well as the only mechanical connection of the access module 1 to termination strip 2. In fact, the two side uprights 14 and 15 are supported and kept in their positions only by means of their fixed joint coupling with single elements 3 without any binding between uprights and termination strips. As a result, the present invention can be used without any structural change in the existing termination strips.

By the way, it should be appreciated that each single element 3 has only two multiple male connectors 8 and 9 for electrical connections and two series of fixed joints with locking abutment 10, guides 17 being arranged on the two side uprights 14 and 15.

Advantageously, this avoids pending wires and brings the possibility of installing/removing the single elements without resorting to tools of any type.

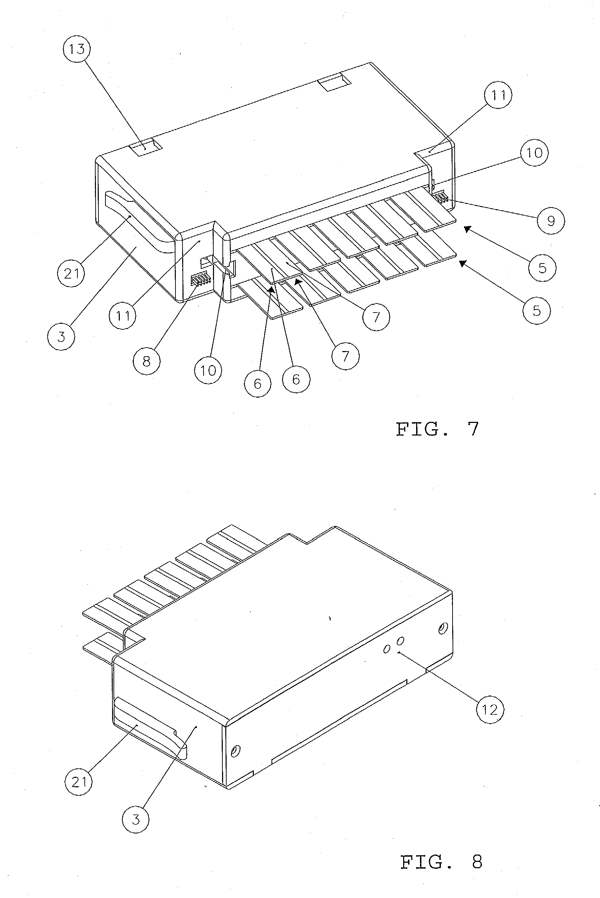

According to a variation of the invention (figs. 7 and 8), each single element 3 has two side lever means 21 parallel to their side faces and hinged near the inner face from which tongues 5 project so that, upon rotating away their free ends from the respective side faces of single element 3, the nearest end of each of them to the hinge point comes in touch with the body of the corresponding side upright 14 or 15, thus helping advantageously the removal of the single element 3 from termination strip 2 in which it is installed. To this end such end near the hinge point is properly rounded.

Still according to the invention, said lever means 21 can also have an inner end (not shown) able to join fixedly under rest conditions, as shown in the above-mentioned figures, a suitable seat arranged in the side uprights in addition to the mechanical fixed joint described above.

The present invention has been described and illustrated according to preferred embodiments thereof, however, it should be understood that those skilled in the art can make technically and/or functionally equivalent modifications and/or replacements without departing from the scope of the present industrial invention.

## Claims

1. An access module (1) for termination strips (2) of telephone cables **characterized in that** in order to operate the sectioning of the telephone wire pairs connected to the termination strips in the "user side", "exchange side" and both sides, it consists of a series of single elements (3) releasably stacked on one another in the termination strip and provided with suitable means (5) for the mechanical and electrical connection to the wire pairs connected to the termination strip.

2. The access module (1) according to claim 1, **characterized in that** it further comprises two side uprights (14, 15) provided with means (16) for the electrical connection to the single elements (3) inserted into the telephone wire pairs connected to termination strip (2), and means (19) for the connection to a local measurement apparatus.

3. The module according to any preceding claim, **characterized in that** each element (3) is connected to two rows of wire pairs disposed on two adjacent parallel planes (4) in case of vertically arranged strips and viceversa in case of horizontally arranged strips.

4. The module according to any preceding claim, **characterized in that** each single element (3) includes a series of electronic circuits and components disposed inside a container preferably of plastics.

5. The module according to any preceding claim, **characterized in that** said mechanical and electrical connecting means, which each single element (3) is provided with, consists of tongues (5) each of them can be inserted between a pair of said reeds to which each telephone wire of the telephone pairs is connected, to operate the sectioning of the exchange side from the user side.

6. The module according to claims 1 to 4, **characterized in that** outwards of each single element (3) tongues 5 are projected that are able to be inserted into the sectioning contacts (4) of the corresponding pairs of termination strip (2) when the single elements (3) are operated.

7. The module according to claim 5 or 6, **characterized in that** each tongue (5) has four conductive contact areas (6 and 7) (two upper areas and two lower areas) corresponding to the elastic end reeds (user side and exchange side) of the two wires of each pair, respectively.

8. The module according to claim 5 or 6, **characterized in that** each tongue has two conductive contact areas (6 or 7) (one upper area and one lower area) corresponding to the elastic end reeds (user side and exchange side) of one of the two wires of each pair, respectively.

9. The module according to claim 7 or 8, **characterized in that** tongues (5) are made of an insulating material to which such conductive contact areas (6, 7) for the elastic reeds connected to the wires of each telephone pair are fastened.

10. The module according to any preceding claim, **characterized in that** on the same side from which tongues (5) project the single element (3) includes a first multiple male connector (8) of the power supply line and the control line of the single element (3) on one side, and a second multiple connector (9) of the two available measurement lines on the other side.

11. The module according to any preceding claim, **characterized in that** said single elements (3) comprise side fitting means provided with a locking abutment (10) at the side facing termination strip (2).

12. The access module (1) according to any preceding claim, **characterized in that** at the corners of the side facing termination strip (2) the single elements (3) are provided with two like angular recesses (11) to provide a greater mechanical withstand and rigidity, upon assembling, to the assembly consisting of the single stacked elements (3) and two side uprights (14 and 15) forming as a whole access module (1).

13. The access module (1) according to any preceding claim, **characterized in that** said single elements (3) are provided with two LEDs (12) whose lighting indicates the connection of the first and/or the second available measurement line at the side opposite to the side facing termination strip (2).

14. The access module (1) according to claims 2 and 10, **characterized in that** located on the two uprights (14, 15) are multiple female right and left connectors (16) corresponding to the already described first and second male connectors (8 and 9) of single elements (3) as well as guide supports (17) for fitting seats (10) of such single elements and hooked tangs (18) for locking such fitting seats.

15. The access module (1) according to claim 2, **characterized in that** multiple female connectors (19) are located on said uprights and connected to the sservice lines of access modules (1).

16. The access module (1) according to claim 2, **characterized in that** located on at least one upright (14 or 15) is at least a pair of hooks (20) for "parking" a single element (3) when the same is removed from its seat during the service of termination line (2), said pair of hooks (20) being able to be inserted into suitable cavities or seats (13) arranged in the container of the single element (3) to be suspended to the upright when it is removed from the operation position.

17. The access module (1) according to any preceding claim, **characterized in that** each access module (1) is one assembly for each termination strip (2) and consists of several single elements (3) and two side uprights (14, 15).

18. The access module (1) according to the preceding claim, **characterized in that**, upon assembling, single elements (3) and the two side uprights (14 and 15) join together only by means of fixed joints both for the mechanical parts (10, 17 and 18) and the electrical connections (8, 9 and 16).

19. The access module (1) according to any preceding claim, **characterized in that** said mechanical and electrical coupling means or tongues (5) are the only electric contact as well as the only mechanical connection of access module (1) to termination strip (2).

20. The access module (1) according to any claim from 2 on, **characterized in that** the two side uprights (14 and 15) are supported and kept in their positions only by means of their fixed joint coupling with single elements (3) without any binding between uprights and termination strips, thus providing that any structural change in the existing termination strips (2) is not required.

21. The access module (1) according to the preceding claim, **characterized in that** each single element (3) has only two multiple male connectors (8 and 9) for electrical connections and two series of fixed joints with locking abutment (10), guides (17) being arranged on the two side uprights (14 and 15), thus avoiding pending wires and bringing the possibility of installing/removing the single elements without resorting to tools of any type.

22. The access module (1) according to claim 2, **characterized in that** each single element (3) has two side lever means (21) parallel to their side faces and hinged near the inner face from which said mechanical and electrical coupling means or tongues (5) project so that, upon rotating away their free ends from the respective side faces of single element (3), the nearest end of each of said lever means (21) to the hinge point comes in touch with the body of the corresponding side upright (14 or 15), thus helping advantageously the removal of the single element (3) from termination strip (2) in which it is installed, said end of lever means (21) near the hinge point being properly rounded.

23. The access module (1) according to the preceding claim, **characterized in that** said lever means (21) have an inner end (not shown) able to join fixedly under rest conditions a suitable seat arranged in the side uprights (14, 15).
